# EUROPEAN PATENT SPECIFICATION

(11) **EP 1 806 905 B1**
(45) Date of publication and mention of the grant of the patent: **19.12.2007**
(21) Application number: 06290044.4
(22) Date of filing: 05.01.2006
(51) Int. Cl.: H04L 29/08, H04L 12/28, H04Q 7/38

(54) **Method of establishing a communication session and communication network**
Verfahren zum Herstellen einer Kommunikationssitzung und Kommunikationsnetzwerk
Procédé pour établir une session de communication et réseau de communication

(43) Date of publication of application: 11.07.2007
(73) Proprietor: Alcatel Lucent, 75008 Paris (FR)
(72) Inventor: Oberle, Karsten, 68199 Mannheim (DE); Wahl, Stefan, 71071 Schwieberdingen (DE)
(74) Representative: Schmidt, Werner Karl

(56) References cited:
- EP-A- 1 370 103
- US-A1- 2004 215 766

## Description

### Background of the invention

The present invention relates to a method of establishing a requested communication session on a user terminal of a subscriber in a communication network via one of a plurality of access networks, comprising checking for available network resources on all active access networks of the plurality of access networks usable by the subscriber.

The present invention also relates to a communication network, comprising:
- a plurality of services;
- a core network adapted to access the services;
- a plurality of access networks in connection with the core network;
- a core network module in operative connection with at least the active accress networks, the core network module being operable to command checking for available network resources on all active access networks of the plurality of access networks usable by a subscriber.

Furthermore, the present invention relates to a core network for use in a communication network of the above-mentioned type and to a computer program product for use in a communication network of the above-mentioned type and / or in the above-mentioned core network.

Conversational real-time services such as Voice over IP (VoIP) or Multimedia over IP (MMoIP) based on Next Generation Networks (NGN), IP Multimedia Subsystems (IMS), and Telecom & Internet converged Services & Protocols for Advanced Networks (TISPAN) generally use Session Initiation Protocol (SIP) for the setup and control of communication sessions. A subscriber (user) in such an environment can have contracts with different access network operators for providing network connectivity and access to said services for his / her set of user terminals, e.g. personal computers (PCs), portable digital assistants (PDA), or the like. These user terminals can have a single or multiple interfaces (in the case of a multi-homed terminal) for connecting to the access network technology, e.g. DSL, WiFi, WiMax, UMTS, or the like.

In the situation in which a given subscriber uses two terminals, one being connected to the communication network via the access network of a first operator and the other one being connected to the communication network via the access network of a second operator, the subscriber may use services on both terminals in parallel, which have been allocated a certain amount of network resources (e.g., bandwidth) in correspondence with the subscriber's contracts or service level agreements (SLAs) with the different access network operators. If the subscriber wants to set up a new service connection or if a third party wants to set up such a connection to the subscriber, the remaining bandwidth and / or quality of service (QoS) may not be sufficient on any one of the access networks usable by the subscriber, and accordingly the session setup is rejected.

In the prior art, there are known solutions which propose indication of a setup request for a new communication session to the user, whereupon the user has to decide to either terminate a current session or to free sufficient resources in order to be able to accept the requested session setup. In the case of current best effort internet, said request for session setup is accepted in any case. However, due to the resulting overload situation all of the concurrent services will suffer from the effective lack of suitable bandwidth. Furthermore, the above-described prior art solution suffers from a lack of user-friendliness arising from the fact that most users are not capable to decide which one of a plurality of ongoing sessions should be terminated in order to be able to accept an incoming setup call.

Prior art document US 2004/215766 A1 discloses a method for creating a network connection to a network, wherein availability of resources of said network is determined prior to attempting establishing said connection in order not to lose any connections. In the context of session handover, a partial handover may be performed in accordance with the available resources.

Prior art document EP 1 370 103 A1 discloses connecting a terminal over an access network to the core network of a radio communication system, wherein upon a connection request from said terminal an entity of said core network performs a check as to which one of a plurality of access networks is the best adapted to fulfill connection-related requirements. Furthermore, a handover between access networks can be performed.

### Object of the invention

It is the object of the present invention to provide a method and a communication network of the above-mentioned type as well as a core network and a computer program product for use in such a communication network, which improve utilisation of the overall access network resources for a given subscriber. It is also an object of the present invention to improve user-friendliness of the above-mentioned method and communication system.

### Description of the invention

According to a first aspect of the present invention the object is achieved by providing a method of the above-mentioned type, which further comprises the steps of:
- freeing network resources in one or a plurality of the active access networks by transferring at least one already established communication session from a first access network of the plurality of access networks to a second access network of the plurality of access networks if the available network resources are sufficient for establishing the requested communication session;
- allocating freed network resources of the first access network for the requested communication session; and
- establishing the requested communication session using the allocated resources of the first access network.

According to a second aspect of the present invention the object is also achieved by providing a communication network of the above-mentioned type, wherein
- a plurality of user terminals of a common subscriber, each using a number of the services, is connected with the core network via a respective active one of the access networks;
- said core network module is further operable to free network resources in one or a plurality of the active access networks by transferring at least one already established communication session from a first access network of the plurality of access networks to a second access network of the plurality of access networks if the available network resources are sufficient for establishing the requested communication session.

According to a third aspect of the present invention the object is also achieved by providing a core network of the above-mentioned type, being connectable with a plurality of active access networks adapted to provide a plurality of services to a subscriber, which comprises a core network module operable to command freeing network resources in one or a plurality of the active access networks by transferring at least one already established communication session from a first access network of the plurality of access networks to a second access network of the plurality of access networks if the available network resources are sufficient for establishing the requested communication session.

According to a fourth aspect of the present invention the object is achieved by a computer program product for use in the communication network of the above-mentioned type and / or in the core network according to said third aspect of the present invention, which comprises program code sequences adapted to enable the core network module to free network resources in one or a plurality of the active access networks by transferring at least one already established communication session from a first access network of the plurality of access networks to a second access network of the plurality of access networks if the available network resources are sufficient for establishing the requested communication session.

In this way and according to a basic idea underlying a present invention, resources in one or a plurality of the active access networks usable by a given subscriber are freed in order to enable the setup of a new session by re-arranging already established sessions between active access networks. This circumvents the commonly encountered problem of prior art methods and systems, wherein an establishment of a new session is blocked although a cumulative bandwidth available on all active access networks would be sufficient to accept the corresponding setup call.

In a preferred embodiment of the method in accordance with the present invention the session transfer is performed using seamless mobility mechanisms. In this way, active sessions can be re-arranged between user terminals in such a way that none of the current sessions have to be terminated. Seamless session mobility features will be included into future releases of the standard of IMS / TISPAN networks.

In another embodiment of the method in accordance with the present invention setting up the communication session is requested by the user device, i.e. the subscriber himself initiates the corresponding setup procedure by requesting a new session (to a new service) to be established. In an alternative embodiment of the method in accordance with the present invention a third party other than the user / subscriber may be eligible to request setting up the communication session.

In a preferred embodiment of the communication network in accordance with the present invention the core network module is invokable by a core network control function in case of a service request unrealizable due to a lack of network resources on any (single) one of the active access networks, wherein said service request can be issued either by means of any one of the user terminals or by means of a third party other than the user / subscriber, as already mentioned above.

In order to achieve seamless session transfer between the access networks, in another embodiment of the communication network in accordance with the present invention the core network module is connected with a session mobility module adapted to seamlessly transfer the already established session.

For optimum flexibility of use the inventive communication network the user terminals may be devised in the form of separate entities, e.g. PCs, PDAs, or the like. Alternatively or additionally, in another embodiment of the communication network in accordance with the present invention the plurality of user terminals may form a multi-home user terminal connected simultaneously to a plurality of active access networks, e.g. by means of respective connection interfaces.

By using the above-described features the present invention improves utilisation of overall access network resources with respect to a given subscriber thus optimising a benefit of said resources, which are paid for by the subscriber. In addition, user-friendliness is improved as the user / subscriber is no longer faced with difficult technical decisions as to, for instance, which service has to be terminated in order to be able to accept the request for a new session. In accordance with the present invention, ongoing sessions are re-arranged between the user terminals and the corresponding access networks, respectively, in such a way that none of the current sessions have to be terminated.

Further advantages and characteristics of the present invention can be gathered from the following description of a preferred embodiment given by way of example only with reference to the enclosed drawings. Features mentioned above as well as below can be used in accordance with the invention either individually or in conjunction. The embodiments mentioned are not to be understood as an exhaustive enumeration but rather as examples with regard to the underlying concept of the present invention.

### Drawings

- Fig. 1: is a schematic block diagram illustrative of a communication system in accordance with the present invention;
- Fig. 2: is a schematic block diagram of the communication system of Fig. 1, wherein bandwidth has been freed to establish a further communication session in accordance with the inventive method; and
- Fig. 3: is a flow chart illustrative of an embodiment of the method in accordance with the present invention.

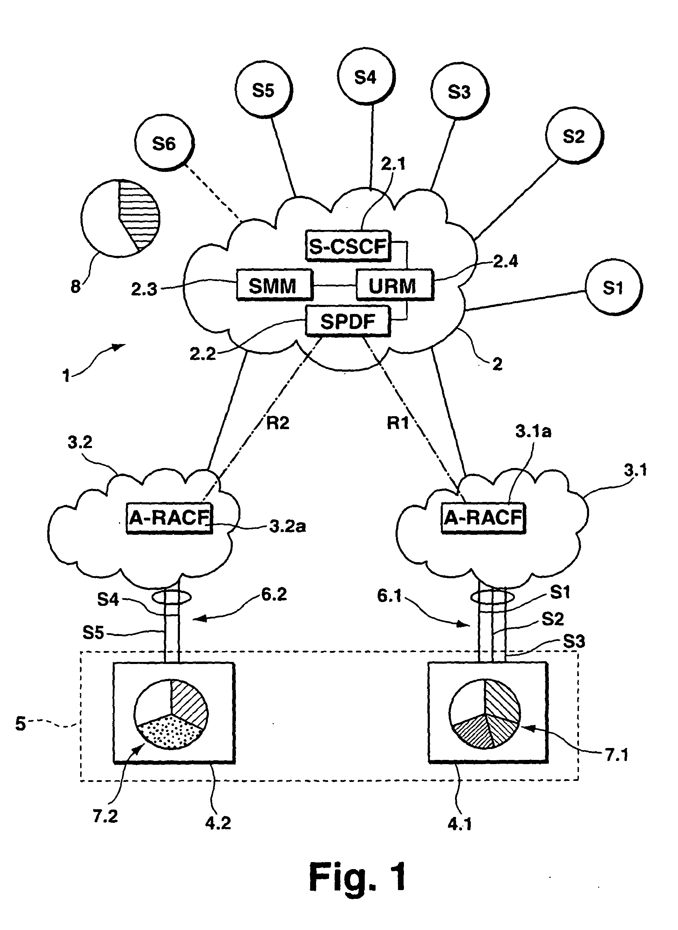

**Fig. 1** shows a communication network **1** in accordance with the present invention. The communication network 1 comprises a core network **2,** e.g. a next generation network (NGN / IMS / TISPAN), connected with a plurality of services **S1 - S6**. The communication network 1 further comprises a plurality of access networks **3.1, 3.2.** A like plurality of user terminals **4.1, 4.2** belonging to a single user **5** (subscriber) - as indicated by a dashed box in Fig. 1 - are connected with a respective access network 3.1, 3.2 for accessing the core network 2 and for using the services provided by the services S1 - S6.

In the embodiment of Fig. 1, the user terminals 4.1, 4.2 are devised as separate user terminals. However, the present invention is not limited to such an embodiment, such that the user terminals 4.1, 4.2 could also be provided in the form of a single multi-service user terminal. In the embodiment of Fig. 1, user terminal 4.1 could be a portable digital assistant (PDA) and user terminal 4.2 could be a personal computer (PC).

As shown in Fig. 1, the core network 2 further comprises a serving-call session control function **2.1** (S-CSCF), a service-based policy decision function **2.2** (SPDF), a session mobility module **2.3** (SMM), and a user resource manager **2.4** (URM), wherein the latter takes on the form of an application server (AS) module; the function of the above-mentioned modules 2.1 - 2.4 will become apparent later. Preferably, at least the user resource manager (URM) 2.4 is devised as a software module and can therefore be provided to the core network 2 by means of suitable program code sequences comprised in a computer program product. Said computer program product can be provided to the core network 2 by means of any suitable program code input device in connection with any suitable computer readable medium, e.g. an optical data carrier such as a CD or DVD (not shown), as known to a person skilled in the art. Furthermore, in the access networks the communication network 1 further comprises respective access-resource admission control functions **3.1a, 3.2a** (A-RACFs), as known to a person skilled in the art.

During operation of the above-described communication network 1, user 5 accesses the core network 2 by means of the user terminals 4.1, 4.2 via respective access networks 3.1, 3.2, which will hereinafter be referred to as "active access networks". The user 5 may have SLAs with other access network operators; however, those access networks (not shown) are not solicited in the present case. In this way, a communication session is established which allows a given user terminal to use a respective service provided by one of the services S1 - S6. In the following, both a given service module and the service offered by that service module will be referenced using a common reference numeral, e.g. reference numeral S1. In the embodiment shown, user terminal 4.1 uses services S1, S2, S3, and user terminal 4.2 uses services S4, S5. To this end, when establishing a corresponding communication session for each service, network resources in terms of bandwidth are allocated for each communication session. Available bandwidth is generally limited by the nature of a respective connection **6.1, 6.2** between a given user terminal 4.1, 4.2 and the associated access network 3.1, 3.2. In Fig. 1, the allocated network resources for the services used by user terminal 4.1 and user terminal 4.2, respectively, are illustrated by means of pie-charts **7.1, 7.2.** In the pie-charts 7.1, 7.2 allocated network resources (in terms of used bandwidth) are indicated by means of hatched areas whereas free bandwidth (available network resources) are indicated by means of an empty (white) area.

Assume that in the communication network 1 of Fig. 1 establishing of a new communication session between the user / subscriber 5 and service S6 is requested, as indicated by means of a dashed line connecting service S6 with the core network 2. A corresponding request for establishing the new communication session can either be issued by the user / subscriber 5 himself, i.e. by means of one of the user terminals 4.1, 4.2, or can originate from a third party (not shown). A required bandwidth to be allocated for establishing a communication session with service S6 is indicated by means of a pie-chart **8,** wherein the hatched area illustrates the bandwidth requirement.

In the above-described starting situation, user 5 thus uses two terminals 4.1, 4.2 each connected via a different access network 3.1, 3.2, which are generally operated by different access network operators. However, as stated above, user terminals 4.1, 4.2 could also be parts of a multi-service terminal (not shown) connected to multiple different access networks in parallel, e.g. with multiple IP stacks. In the situation depicted in Fig. 1, user 5 cannot accept the requested new session setup with service /service S6 because neither one of the active access networks 3.1, 3.2 has sufficient bandwidth available to provide the requested service S6, as can be gathered from a comparison of the hatched area in pie chart 8 with the free areas of respective pie charts 7.1, 7.2, which indicate the available bandwidth / network resources for the individual active access networks 3.1, 3.2.

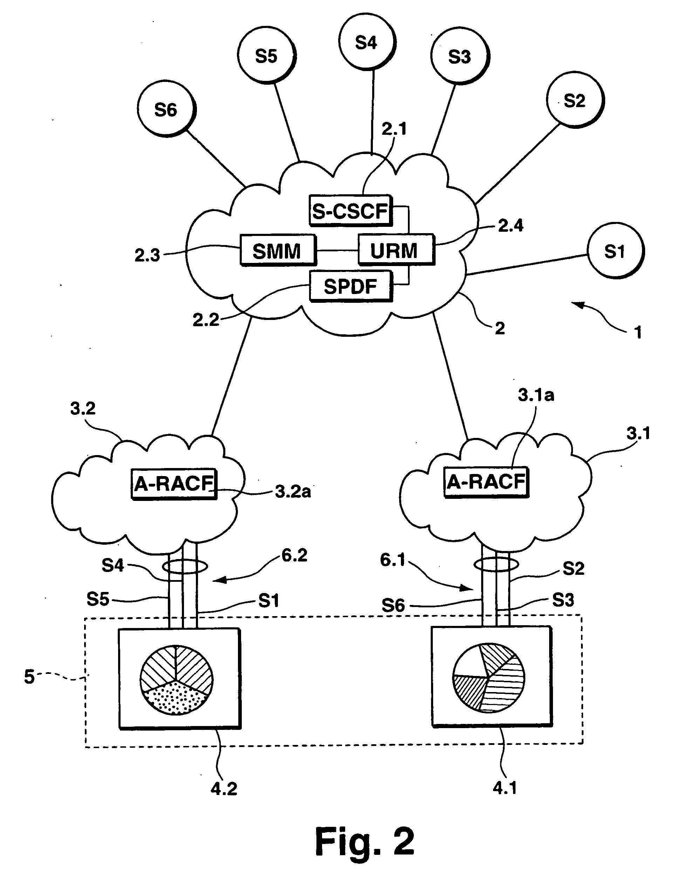

In this situation and in accordance with the present invention, the S-CSCF 2.1 verifies whether or not sufficient network resources are available by invoking the user resource manager (URM) 2.4. The URM 2.4 then communicates with the SPDF 2.2 which in turn sends respective requests **R1, R2** to the A-RACFs 3.1 a, 3.2a of the access networks 3.1, 3.2 as depicted by means of respective dash-dotted lines in Fig. 1 for to check for available network resources on all active access networks usable by the user / subscriber 5. Accordingly, the URM 2.4 identifies the present lack of network resources for establishing a communication session with service /service S6 on both active access networks 3.1, 3.2. However, from information provided by the A-RACFs 3.1 a, 3.2a the URM 2.4 also identifies that a total available bandwidth on both access networks 3.1, 3.2 may be sufficient for establishing the requested communication session, such that re-arranging the pending communication sessions S1 - S5 can solve the blocking situation. Thus, the URM 2.4 commands the SMM 2.3 to perform a preferably seamless transfer of sessions between the access networks 3.1, 3.2 and the user terminals 4.1, 4.2, respectively. The outcome of this session transfer will now be explained with reference to appended Fig. 2.

**Fig. 2** shows the communication network 1 of Fig. 1 after said session transfer. In Fig. 2, the same reference numerals as in Fig 1 are used to identify the same or similar elements. Under the action of the SMM 2.3 invoked by the URM 2.4 session S1 has been seamlessly transferred from access network 3.1 (user terminal 4.1) to access network 3.2 (user terminal 4.2). In this way, additional resources have been made available on access network 3.1, which can be allocated for the requested service S6 by means of a conventional resource scheduler, e.g. RACF 3.1 a, as known to a person skilled in the art. In this way, the user terminal 4.1 can now accept the requested new session with service / service module S6, as indicated by means of a corresponding hatched area added to pie chart 7.1.

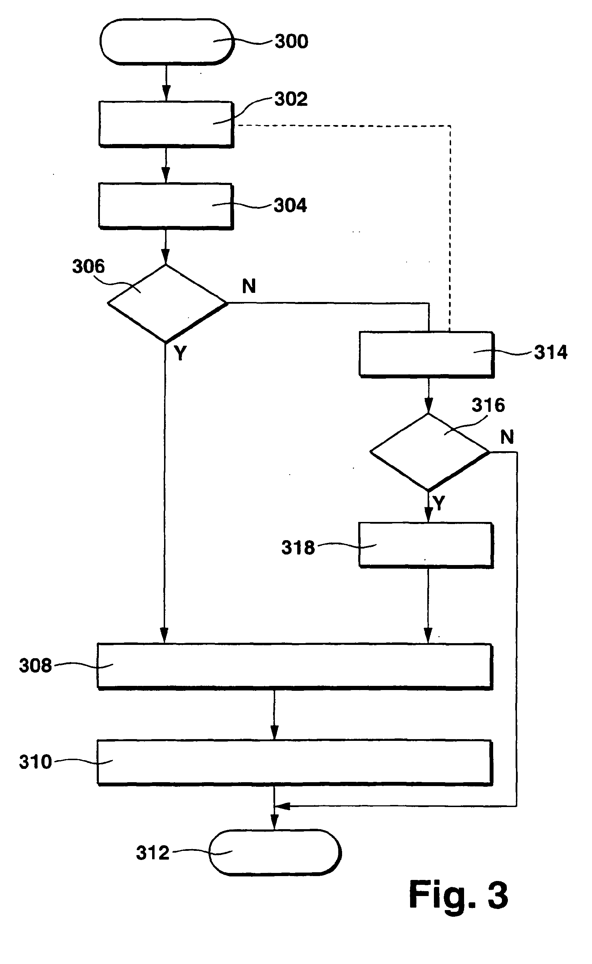

**Fig. 3** shows a flow chart of an embodiment of the method in accordance with the present invention, as previously explained with reference to Figs. 1 and 2.

The method starts with step **300.** In a subsequent step **302** a new session with a service accessible by means of the communication network 1 of Figs. 1 and 2 is requested, e.g. by the first user terminal 4.1 of the user 5. In case that the required bandwidth for this service is not available in the corresponding access network 3.1, in step **304** the S-CSCF checks for available resources on all access networks available to the user 5 in order to find out, whether or not there is a possibility to establish the requested session via another one of the active access networks for the user in question. If the corresponding question in step **306** is answered in the affirmative (y), then in step **308** network resources of the corresponding access network are allocated, and the session is established in step **310.** The method terminates with step **312.**

In the case of Fig. 1 and Fig. 2, wherein each of the user terminals 4.1, 4.2 communicates with only one corresponding access network 3.1, 3.2, when performing the above steps, the new session may be established on the second user terminal 4.2 although the first user terminal 4.1 has requested to establish it. Therefore, if it is required that the new session has to be established on the requesting user terminal 4.1, the steps 304 and 306 may be omitted (see the dashed line in Fig. 3).

Otherwise, if the question in step 306 is answered in the negative (n), in a subsequent step 314 the URM is invoked which commands performing a check on the overall available bandwidth with respect to the active access networks, as explained in detail above. If the corresponding question in step **316** is answered in the affirmative (y), then in a subsequent step **318** the SMM is invoked by the URM and at least one ongoing session is transferred between the active access networks in order to free suitable bandwidth for establishing the requested new communication session. After that the inventive method is continued with step 308, as described above. If the question in step 316 is answered in the negative (n), the method immediately terminates with step 312.

Thus, the present invention effectively provides for a resource partition over different access networks in a multi-service and multi-access communication network environment, thus improving the utilisation of the overall access network resources as well as user-friendliness through re-arranging already established sessions between access networks.

## Claims

1. A method of establishing a requested communication session on a user terminal (4.1, 4.2) of a subscriber (5) in a communication network (1) via one of a plurality of access networks (3.1, 3.2), comprising checking for available network resources on all active access networks (3.1, 3.2) of the plurality of access networks usable by the subscriber (5);
**characterised by** the steps of:
- freeing network resources in one or a plurality of the active access networks (3.1) by transferring at least one already established communication session from a first access network (3.1) of the plurality of access networks to a second access network (3.2) of the plurality of access networks if the available network resources on all of the active access networks (3.1, 3.2) are sufficient for establishing the requested communication session;
- allocating freed network resources of the first access network (3.1) for the requested communication session; and
- establishing the requested communication session using the allocated resources of the first access network (3.1).

2. The method of claim 1, **characterised in that** session transfer is performed using seamless mobility mechanisms.

3. The method of claim 1, **characterised in that** setting up the communication session is requested by the user (5).

4. The method of claim 1, **characterised in that** setting up the communication session is requested by a third party other than the user (5).

5. The method of claim 1, **characterised in that** the available network resources are determined in terms of free bandwidth or QoS.

6. A communication network (1), comprising:
- a plurality of services (S1 - S6);
- a core network (2) adapted to access the services;
- a plurality of access networks (3.1, 3.2) in connection with the core network;
- a core network module (2.4) in operative connection with at least the active access networks, the core network module being operable to command checking for available network resources on all active access networks (3.1, 3,2) of the plurality of access networks usable by a subscriber (5);
**characterised in that**
- a plurality of user terminals (4.1, 4.2) of a common subscriber (5), each using a number of the services, is connected with the core network via a respective active one of the access networks;
- said core network module (2.4) is further operable to free network resources in one or a plurality of the active access networks (3.1) by transferring at least one already established communication session from a first access network (3.1) of the plurality of access networks to a second access network (3.2) of the plurality of access networks if the available network resources on all of the active access networks (3.1, 3.2) are sufficient for establishing the requested communication session.

7. The communication network (1) of claim 6, **characterised in that** the core network module (2.4) is invokable by a core network control function (2.1) in case of a service request unrealizable due to a lack of network resources on any one of the active access networks (3.1, 3.2), said service request being issued by means of any one of the user terminals (4.1, 4.2) or by means of a third party.

8. The communication network (1) of claim 6, **characterised in that** the core network module (2.4) is connected with a session mobility module (2.3) adapted to seamlessly transfer the already established communication session.

9. The communication network (1) of claim 6, **characterised in that** the plurality of user terminals (4.1, 4.2) form a multi-service user terminal connected simultaneously to a plurality of active access networks (3.1, 3.2).

10. A core network (2) for use in the communication network (1) according to the preamble of claim 6, being connectable with a plurality of active access networks (3.1, 3.2) adapted to provide a plurality of services (S1 - S6) to a subscriber (5), **characterised in that** the core network module (2.4) is operable to command freeing network resources in one of the active access networks (3.1) by transferring at least one already established communication session from a first access network (3.1) of the plurality of access networks to a second access network (3.2) of the plurality of access networks if the available network resources on all of the active access networks (3.1, 3.2) are sufficient for establishing the requested communication session.

11. A computer program product for use in the communication network (1) according to the preamble of claim 6 and / or in the core network (2) according to the preamble of claim 10, **characterised by** program code sequences adapted to enable the core network module (2.4) to :
free network resources in one or a plurality of the active access networks (3.1) by transferring at least one already established communication session from a first access network (3.1) of the plurality of access networks to a second access network (3.2) of the plurality of access networks if the available network resources on all of the active access networks (3.1, 3.2) are sufficient for establishing the requested communication session.

## Patentansprüche

1. Verfahren zum Aufbau einer angeforderten Kommunikationssitzung auf einem Benutzer-Endgerät (4.1, 4.2) eines Teilnehmers (5) in einem Kommunikationsnetzwerk (1) über eines aus einer Vielzahl von Zugangsnetzwerken (3.1, 3.2), das die Suche nach verfügbaren Netzwerk-Ressourcen auf allen aktiven Netzwerken (3.1, 3.2) der Vielzahl von Zugangsnetzwerken, die vom Teilnehmer (5) benutzt werden können, umfasst;
**gekennzeichnet durch** folgende Schritte:
- Freisetzung von Netzwerk-Ressourcen in einem oder einer Vielzahl der aktiven Zugangsnetzwerke (3.1), indem mindestens eine bereits aufgebaute Kommunikationssitzung von einem ersten Zugangsnetzwerk (3.1) aus der Vielzahl von Zugangsnetzwerken zu einem zweiten Zugangsnetzwerk (3.2) aus der Vielzahl von Zugangsnetzwerken übertragen wird, wenn die verfügbaren Netzwerk-Ressourcen auf allen aktiven Zugangsnetzwerken (3.1, 3.2) ausreichen, die angeforderte Kommunikationssitzung aufzubauen;
- Vergabe der freigesetzten Netzwerk-Ressourcen des ersten Zugangsnetzwerks (3.1) für die angeforderte Kommunikationssitzung; und
- Aufbau der angeforderten Kommunikationssitzung unter Verwendung der zugewiesenen Ressourcen des ersten Zugangsnetzwerks (3.1).

2. Verfahren aus Anspruch 1, **dadurch gekennzeichnet, dass** die Sitzungs-Übertragung durchgeführt wird, indem Mechanismen der nahtlosen Mobilität benutzt werden.

3. Verfahren aus Anspruch 1, **dadurch gekennzeichnet, dass** der Aufbau der Kommunikationssitzung vom Benutzer (5) angefordert wird.

4. Verfahren aus Anspruch 1, **dadurch gekennzeichnet, dass** der Aufbau der Kommunikationssitzung von einem Dritten angefordert wird, der nicht der Benutzer (5) ist.

5. Verfahren aus Anspruch 1, **dadurch gekennzeichnet, dass** die verfügbaren Netzwerk-Ressourcen in Form freier Bandbreite oder Dienstgüte (QoS) bestimmt werden.

6. Kommunikationsnetzwerk (1), das folgendes umfasst :
- Eine Vielzahl von Diensten (S1 - S6) ;
- Ein Kernnetz (2), das angepasst ist, auf die Dienste zuzugreifen;
- Eine Vielzahl von zugangsnetzwerken (3.1, 3.2), die mit dem Kernnetz verbunden sind;
- Ein Kernnetz-Modul (2.4) in funktionsfähiger Verbindung mit mindestens den aktiven Zugangsnetzwerken, wobei das Kernnetz-Modul in der Lage ist, die überprüfung auf verfügbare Netzwerk-Ressourcen auf allen aktiven Zugangsnetzwerken (3.1, 3.2) aus der Vielzahl von Zugangsnetzwerken, die der Teilnehmer (5) benutzen kann, anzuordnen,
**dadurch gekennzeichnet, dass**
- eine Vielzahl von Benutzer-Endgeräten (4.1, 4.2) eines üblichen Teilnehmers (5), von denen jedes eine Anzahl von Diensten benutzt, über ein entsprechendes aktives der zugangsnetzwerke mit dem Kernnetz verbunden ist;
- das Kernnetz-Modul (2.4) weiterhin in der Lage ist, Netzwerk-Ressourcen in einem oder einer Vielzahl der aktiven Zugangsnetzwerke (3.1) freizusetzen, indem mindestens eine bereits aufgebaute Kommunikationssitzung von einem ersten Zugangsnetzwerk (3.1) aus der Vielzahl von Zugangsnetzwerken zu einem zweiten Zugangsnetzwerk (3.2) aus der Vielzahl von Zugangsnetzwerken übertragen wird, wenn die verfügbaren Netzwerk-Ressourcen auf allen aktiven Zugangsnetzwerken (3.1, 3.2) ausreichen, die angeforderte Kommunikationssitzung aufzubauen.

7. Kommunikationsnetzwerk (1) aus Anspruch 6, **dadurch gekennzeichnet, dass** das Kernnetz-Modul (2.4) von einer Kernnetz-Steuerungsfunktion (2.1) aufgerufen werden kann, wenn eine Dienstanforderung nicht realisierbar ist, weil Netzwerk-Ressourcen in einem der aktiven Zugangsnetzwerke (3.1, 3.2) fehlen, wobei die Dienstanforderung von einem der Benutzer-Endgeräte (4.1, 4.2) oder von einem Dritten ausgegeben wird.

8. Kommunikationsnetzwerk (1) aus Anspruch 6, **dadurch gekennzeichnet, dass** das Kernnetz-Modul (2.4) mit einem Sitzungs-Mobilitäts-Modul (2.3) verbunden ist, das angepasst ist, die bereits aufgebaute Kommunikationssitzung nahtlos zu übergeben.

9. Kommunikationsnetzwerk (1) aus Anspruch 6, **dadurch gekennzeichnet, dass** die Vielzahl von Benutzer-Endgeräten (4.1, 4.2) ein Mehrdienste-Benutzer-Endgerät bilden, das gleichzeitig mit einer Vielzahl von aktiven Zugangsnetzwerken (3.1, 3.2) verbunden ist.

10. Ein Kernnetz (2) zur Verwendung in dem Kommunikationsnetzwerk (1) gemäß dem Oberbegriff von Anspruch 6, das mit einer Vielzahl von aktiven Zugangsnetzwerken (3.1, 3,2) verbunden werden kann, die angepasst sind, eine Vielzahl von Diensten (S1 - S6) für einen Teilnehmer (5) bereitzustellen, **dadurch gekennzeichnet, dass** das Kernnetz-Modul (2.4) in der Lage ist, Netzwerk-Ressourcen in einem der aktiven Zugangsnetzwerke (3.1) freizusetzen, indem mindestens eine bereits aufgebaute Kommunikationssitzung von einem ersten Zugangsnetzwerk (3.1) aus der Vielzahl von Zugangsnetzwerken zu einem zweiten Zugangsnetzwerk (3.2) aus der Vielzahl von Zugangsnetzwerken übertragen wird, wenn die verfügbaren Netzwerk-Ressourcen auf allen aktiven Zugangsnetzwerken (3.1, 3.2) ausreichen, die angeforderte Kommunikationssitzung aufzubauen.

11. Ein Computer-Programm-Produkt zur Verwendung in dem Kommunikationsnetzwerk (1) gemäß dem Oberbegriff von Anspruch 6 und/oder im Kernnetz (2) gemäß dem Oberbegriff von Anspruch 10, **gekennzeichnet durch** Programm-Code-Sequenzen, die angepasst sind, das Kernnetz-Modul (2.4) in die Lage zu versetzen:
Netzwerk-Ressourcen in einem oder einer Vielzahl der aktiven Zugangsnetzwerke (3.1) freizusetzen, indem mindestens eine bereits aufgebaute Kommunikationssitzung von einem ersten Zugangsnetzwerk (3.1) aus der Vielzahl von Zugangsnetzwerken zu einem zweiten Zugangsnetzwerk (3.2) aus der Vielzahl von Zugangsnetzwerken übertragen wird, wenn die verfügbaren Netzwerk-Ressourcen auf allen aktiven Zugangsnetzwerken (3.1, 3.2) ausreichen, die angeforderte Kommunikationssitzung aufzubauen.

## Revendications

1. Procédé permettant d'établir une session de communication demandée sur un terminal utilisateur (4,1, 4,2) d'un abonné (5) dans un réseau de communication un (1) par l'intermédiaire d'une pluralité de réseaux d'accès (3.1, 3.2), comprenant le contrôle des ressources réseau disponibles sur tous les réseaux d'accès actifs (3.1, 3.2) de la pluralité de réseaux d'accès utilisables par l'abonné (5) ;
**caractérisé par** les étapes de :
- libération des ressources réseau dans un ou une pluralité de réseaux d'accès actifs (3.1) en transférant au moins une session de communication déjà établie d'un premier réseau d'accès (3.1) de la pluralité de réseaux d'accès à un second réseau d'accès (3.2) de la pluralité de réseaux d'accès si les ressources réseau disponibles sur tous les réseaux d'accès actifs (3.1, 3.2) sont suffisantes pour établir la session de communication demandée ;
- affectation des ressources réseau libérées du premier réseau d'accès (3.1) pour la session de communication demandée ; et
- établissement de la session de communication demandée en utilisant les ressources affectées du premier réseau d'accès (3.1).

2. Procédé selon la revendication 1, **caractérisé en ce que** le transfert de session est effectué en utilisant les mécanismes de mobilité sans couture.

3. Procédé selon la revendication 1, **caractérisé en ce que** l'établissement de la session de communication est demandé par l'utilisateur (5).

4. Procédé selon la revendication 1, **caractérisé en ce que** l'établissement de la session de communication est demandé par une tierce personne autre que l'utilisateur (5).

5. Procédé selon la revendication 1, **caractérisé en ce que** les ressources réseau disponibles sont déterminées en fonction de la bande passante libre ou de la QoS (qualité de service).

6. Réseau de communication (1), comprenant :
- une pluralité de services (S1 - S6) ;
- un réseau dorsal (2) adapté pour accéder aux services ;
- une pluralité de réseaux d'accès (3.1, 3.2) en liaison avec le réseau dorsal ;
- un module de réseau dorsal (2.4) en liaison fonctionnelle avec au moins les réseaux d'accès actifs, le module de réseau dorsal pouvant être utilisé pour commander le contrôle des ressources réseau disponibles sur tous les réseaux d'accès actifs (3.1, 3.2) de la pluralité de réseaux d'accès utilisables par un abonné (5) ;
**caractérisé en ce qu'**
- une pluralité de terminaux utilisateur (4.1, 4.2) d'un abonné commun (5), utilisant chacun un certain nombre de services, sont connectés au réseau dorsal par l'intermédiaire de l'un des réseaux d'accès actifs respectifs ;
- ledit module de réseau dorsal (24) peut en outre être utilisé pour libérer les ressources réseau dans un ou une pluralité de réseaux d'accès actifs (3.1) en transférant au moins une session de communication déjà établie d'un premier réseau d'accès (3.1) de la pluralité de réseaux d'accès à un second réseau d'accès (3.2) de la pluralité de réseaux d'accès si les ressources réseau disponibles sur tous les réseaux d'accès actifs (3.1, 3.2) sont suffisantes pour établir la session de communication demandée.

7. Réseau de communication (1) selon la revendication 6, **caractérisé en ce que** le module de réseau dorsal (2.4) peut être appelé par une fonction de commande de réseau dorsal (2.1) en cas de requête de service irréalisable en raison d'un manque de ressources réseau sur l'un quelconque des réseaux d'accès actifs (3.1, 3.2), ladite requête de service étant émise au moyen de l'un quelconque des terminaux utilisateur (4.1, 4.2) ou au moyen d'une tierce personne.

8. Réseau de communication (1) selon la revendication 6, **caractérisé en ce que** le module de réseau dorsal (2.4) est connecté à un module de mobilité de sessions (2.3) adapté pour transférer sans couture la session de communication déjà établie.

9. Réseau de communication (1) selon la revendication 6, **caractérisé en ce que** la pluralité de terminaux utilisateur (4.1, 4.2) forment un terminal utilisateur multi-services connecté simultanément à une pluralité de réseaux d'accès actifs (3.1, 3.2).

10. Réseau dorsal (2) destiné à être utilisé dans le réseau de communication (1) selon le préambule de la revendication 6, pouvant être connecté à une pluralité de réseaux d'accès actifs (3.1, 3.2) adaptés pour fournir une pluralité de services (S1 - S6) à un abonné (5), **caractérisé en ce que** le module de réseau dorsal (2.4) peut être utilisé pour commander la libération des ressources réseau dans l'un des réseaux d'accès actifs (3.1) en transférant au moins une session de communication déjà établie d'un premier réseau d'accès (3.1) de la pluralité de réseaux d'accès à un second réseau d'accès (3.2) de la pluralité de réseaux d'accès si les ressources réseau disponibles sur tous les réseaux d'accès actifs (3.1, 3.2) sont suffisantes pour établir la session de communication demandée.

11. Produit de programme informatique destiné à être utilisé dans le réseau de communication (1) selon le préambule de la revendication 6 et/ou dans le réseau dorsal (2) selon le préambule de la revendication 10, **caractérisé par** des séquences de code de programme adaptées pour permettre au module de réseau dorsal (2.4) de :
libérer les ressources réseau dans un ou une pluralité de réseaux d'accès actifs (3.1) en transférant au moins une session de communication déjà établie d'un premier réseau d'accès (3.1) de la pluralité de réseaux d'accès à un second réseau d'accès (3.2) de la pluralité de réseaux d'accès si les ressources réseau disponibles sur tous les réseaux d'accès actifs (3.1, 3.2) sont suffisantes pour établir la session de communication demandée.
